# EUROPÄISCHE PATENTSCHRIFT

(11) **EP 0 883 358 B1**
(45) Veröffentlichungstag und Bekanntmachung des Hinweises auf die Patenterteilung: **08.09.1999**
(21) Anmeldenummer: 97905066.3
(22) Anmeldetag: 20.02.1997
(51) Int. Cl.: A46B 3/06

(54) **VERFAHREN ZUR HERSTELLUNG VON BORSTENWAREN, INSBESONDERE BÜRSTEN**
METHOD OF PRODUCING BRISTLED ARTICLES, IN PARTICULAR BRUSHES
PROCEDE DE PRODUCTION D'ARTICLES DE BROSSERIE, NOTAMMENT DE BROSSES

(30) Priorität: 21.02.1996 DE 19606416
(43) Veröffentlichungstag der Anmeldung: 16.12.1998
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: EP9700825
(87) Internationale Veröffentlichungsnummer: WO9730611

(56) Entgegenhaltungen:
- EP-A- 0 124 937
- EP-A- 0 150 785
- DE-A- 3 637 750
- PATENT ABSTRACTS OF JAPAN vol. 15, no. 141 (C-822), 10.April 1991 & JP 03 023807 A (SHINWA SEISAKUSHO K.K), 31.Januar 1991,
- PATENT ABSTRACTS OF JAPAN vol. 14, no. 43 (C-681), 26.Januar 1990 & JP 01 277506 A (SHINWA SEISAKUSHO K.K.), 8.November 1989,

## Beschreibung

Die Erfindung betrifft ein Verfahren zur Herstellung von Borstenwaren, insbesondere Bürsten.

Bei der Herstellung von Borstenwaren, insbesondere Bürsten, Pinseln, Matten, Pads, Bodenbelägen etc., ist es notwendig, eine Vielzahl von Einzelborsten oder Borstenbündeln mit einem Borstenträger einstückig zu verbinden. Es sind im Stand der Technik zu diesem Zweck verschiedene Verfahren bekannt, die jedoch alle gewisse Nachteile mit sich bringen.

Seit der Verwendung von Kunststoffen sowohl für die Borsten als auch den Borstenträger sind viele Versuche unternommen worden, die früher mechanische Befestigung der Borsten bzw. Borstenbündel am Borstenträger durch eine form- oder stoffschlüssige Verbindung ohne weitere mechanische Befestigungsmittel zu ersetzen. Ein wesentliches Qualitätsmerkmal für Borstenwaren ist die Auszugsfestigkeit der einzelnen Borsten bzw. der Borstenbündel, d. h. die Borsten müssen so in der Kunststoffmasse des Borstenträgers eingebettet sein, daß sie sich unter den bei Gebrauch einwirkenden Kräften nicht lösen. Von den bekannten Verfahren haben sich deshalb nur solche als tauglich erwiesen, bei denen an den Bündelenden eine Verdickung vorgesehen wird, die nach dem Einbringen in die Kunststoffmasse des Borstenträgers eine Art Anker bildet und außerdem die Borsten an ihrem befestigungsseitigen Ende miteinander verbindet, so daß an dem Bündel oder auch nur an einzelnen Borsten wirksame Auszugskräfte in die Verdickung eingeleitet und von deren Einspannung im Borstenträger aufgenommen werden.

Aus der DE 36 37 750 A1 ist es bekannt, in dem Borstenträger Sacklöcher auszubilden und das die Sacklöcher umgebende Kunststoffmaterial bis in den fließfähigen Bereich zu erwärmen. Anschließend wird ein unverschweißtes oder verschweißtes Borstenbündel mit dem Verankerungsende in das aufgeschmolzene Sackloch hineingedrückt, wodurch die Borsten in dem Borstenträger gehalten sind. Häufig ist jedoch noch ein zusätzliches mechanisches Verdichten der Schmelze im Bereich des Lochrandes notwendig. Nachteilig ist bei diesem Verfahren jedoch insbesondere, daß das erforderliche Erwärmen des Borstenträgermaterials bis in den thermoplastischen Bereich bei sehr genau gewählten, relativ geringen Erwärmungstemparaturen stattfinden muß. Aufgrund dieser langsamen Erwärmung sind mit diesem Verfahren relativ lange Zyklus- Zeiten verbunden, was unwirtschaftlich ist. Darüber hinaus besteht bei einseitiger Erwärmung des Borstenträgers die Gefahr, daß sich dieser verzieht. Desweiteren ist die gezielte Einbringung von Wärmeenergie in eine Vielzahl eng benachbarter Sacklöcher sehr schwierig, da insbesondere bei sehr kleinen Bürsten die Gefahr besteht, daß die Sacklöcher bei Erwärmung in sich zusammenfallen. Bei der Zuführung von Einzelborsten in Sacklöcher tritt das Problem auf, daß die geringe Biegesteifigkeit der Einzelborsten bei ihrer Erwärmung nochmals deutlich herabgesetzt ist, so daß es bei der Zuführung zu einem seitlichen Ausweichen der Borsten kommen kann.

Es ist desweiteren bekannt, die Borsten auf den Borstenträger aufzuschweißen. Dazu werden die Borsten bzw. die Borstenbündel und der Borstenträger, die aus dem gleichen Material bestehen, bis zu einem thermoplastischen Zustand erwärmt, woraufhin die beiden Bauteile aufeinandergepreßt werden. Aufgrund der starken Erwärmung der Borsten kommt es zu einer molekularen Reorientierung des Borstenmaterials und damit zu einer deutlichen Verschlechterung der Biegesteifigkeit der einzelnen Borsten sowie einer Abnahme ihrer Zugfestigkeit. In einer Verfahrensvariante können am Ende der Borsten bzw. des Borstenbündels leicht angedickte Köpfe ausgebildet sein. Da die beiden Bauteile nur über die an den Verbindungsstellen zusammenfließenden Materialien verbunden sind, ergibt sich eine nicht immer ausreichende Verbindung der beiden Bauteile. Des weiteren sind auch mit diesem Verfahren relativ lange Zyklus-Zeiten verbunden. Beim Aufschweißen der Borsten oder Borstenbündel bilden sich Schweißfüße auf dem Borstenträger, so daß dieser eine abgestufte Oberfläche besitzt, in der sich Bakterien oder sonstige Verunreinigungen ansammeln können. Dies erschwert die Reinigung der Bürste wesentlich und ist darüberhinaus äußerst unhygienisch.

Besonders schwierig ist es, Einzelborsten in ausreichender Qualität in Sacklöchern eines Borstenträgers zu befestigen. Bei der Erwärmung einer Einzelborste bildet sich ein Tropfen, der den Durchmesser des sehr kleinen Sackloches, in das die Einzelborste eingeführt werden soll, überschreitet. Beim Einführen der Einzelborste kommt es somit zu einem Verschmieren des Kunststoffmaterials, wodurch eine sichere Verbindung zwischen der Einzelborste und dem Borstenträger nicht gewährleistet ist. Bei einer Zuführung der Einzelborste im erwärmten Zustand in das Sackloch kann es bei Stauchung der Einzelborste zum Ausknicken kommen, wodurch eine korrekte gegenseitige Ausrichtung einer Vielzahl von Einzelborsten nicht zu erzielen ist.

Es ist erwünscht, sowohl bei den Borsten, die in der Regel aus höherwertigen Kunststoffen, wie Polyamiden, bestehen, als auch beim Borstenträger der Materialeinsatz so gering wie möglich zu halten, was durch entsprechend kurze Einspannung der Borsten zu verwirklichen wäre. Es gibt ferner Borstenwaren, bei denen der Borstenträger aus gebrauchstechnischen Gründen eine möglichst geringe Wandstärke aufweisen sollte. Dies gilt beispielsweise für Zahnbürsten, um wegen der beengten Verhältnisse in der Mundhöhle eine einschließlich der Borstenlänge möglichst flache Ausführung zu gewährleisten.

Darüber hinaus ist bei den bekannten Verfahren der Nachteil gegeben, daß die durch Verstrecken und thermisches Stabilisieren der Monofile gewonnene Biegefestigkeit bzw. Biegeelastizität (Wiederaufrichtvermögen) der Borsten durch das Aufschmelzen der Borstenenden anläßlich der Bildung der Verdickung beeinträchtigt wird. Es kommt im erwärmten Bereich der Borsten zu einer molekularen Reorientierung und damit zu einer Verschlechterung des Biegeverhaltens der einzelnen Borste sowie zu einer Abnahme der Zugfestigkeit. Dem kann nur durch eine ausreichend große Einbettungslänge und somit einer seitlichen Stützung der Borste entgegengewirkt werden, was jedoch aus o.g. Gründen nachteilig ist.

Der Erfindung liegt die Aufgabe zugrunde, ein Verfahren zur Herstellung von Borstenwaren, insbesondere Bürsten zu schaffen, bei dem mit geringem Materialeinsatz eine ausreichende Auszugsfestigkeit der einzelnen Borsten wie auch der Bündel erreicht wird, die Biegeelastizität und das Wiederaufrichtvermögen der Borsten erhalten bleiben und das eine hohe Produktivität bei der Herstellung von Borstenwaren gewährleistet.

Erfindungsgemäß wird diese Aufgabe durch das Verfahren gemäß Anspruch 1 gelöst.

Bei dem erfindungsgemäßen Verfahren werden in dem aus thermoplastischen Material bestehenden Borstenträger zunächst in bekannter Weise mehrere Sacklöcher ausgebildet, in die jeweils eine aus thermoplastischen Material bestehende Einzelborste oder ein entsprechendes Borstenbündel soweit vorzugsweise unter enger Passung eingeführt wird, bis ihre Unterseite auf dem Sacklochboden aufsitzt. Am unteren Ende der Einzelborste oder des Borstenbündels ist dabei keine Verdickung oder Fuß ausgebildet, so daß die Sacklöcher und damit auch die Einzelborsten bzw. Borstenbündel sehr eng nebeneinander angeordnet sein können. Dies ermöglicht es, die Beborstung bis nahe an den Rand des Borstenträgers vorzusehen.

Die im kalten Zustand relativ zueinander positionierten Bauteile (Borstenträger und Einzelborste bzw. Borstenbündel) werden dann direkt durch unmittelbare Einwirkung von Laserstrahlen, die vorzugsweise von einem CO₂-Laser, einem Neodym-Laser oder einem Eximer-Laser aufgebracht werden, in ihrem Kontaktabschnitt im Bereich des Sacklochbodens miteinander verbunden. Die Laserstrahlen können durch eines der Bauteile, das für die Laserstrahlen durchlässig bzw. nicht-absorbierend ist, direkt und im wesentlichen ohne Energieverluste bis zur Verbindungsstelle zwischen den Borsten und dem Borstenträger transmittiert bzw. geleitet werden. Im Kontaktabschnitt werden die Laserstrahlen in hohem Maße absorbiert, wodurch Wärme entsteht, die die thermoplastischen Materialien aufschmilzt, so daß die Borsten bzw. Borstenbündel mit dem Borstenträger verschweißt werden.

Die molekulare Struktur der Borste wird dabei nicht gestört, weil die in der Borste längsorientierten Moleküle ihre Orientierung beibehalten, da ihnen eine Ausweichmöglichkeit, d. h. die Möglichkeit zu einem Tropfen zu schrumpfen fehlt.

Ein längeres Aneinanderdrücken von Borste und Borstenträger ist nach einem kurzen Laserimpuls nicht notwendig. Die Sacklocher halten die Borsten schon im unverschweißten Zustand und erst recht nach kurzer Schweißzeit, so daß unmittelbar nach der Schweißung ein Weitertransport zu anderen Arbeitsstationen möglich ist.

Zum Zwecke der Absorbierung der Laserstrahlen kann im Kontaktabschnitt zumindest eines der zu verbindenden Bauteile zumindest abschnittsweise eine die Laserstrahlen absorbierende Charakteristik besitzen. Dies kann beispielsweise dadurch erreicht werden, daß das gesamte Bauteil aus einem die Laserstrahlen absorbierenden thermoplastischen Kunststoff, wie den Homo- und Copolymeren der Polypropylene, Polyethylene, Polyamide, Polyester, Polyacetale, Styrolpolymere, Schwefelpolymere, Polyimide, Fluorpolymere, Polyketone, Polyetherketone oder einem anderen durch Einwirkung des Laserstrahls aufschmelzbaren, abgewandelten Naturstoff mit thermoplastischen Eigenschaften gebildet ist, der sich nach Abschluß der Energiezuführung wieder verfestigt.

Laserstrahlen besitzen eine nur geringe Strahldivergenz, so daß eine hohe Richtungsstabilität des Laserstrahls bei gleichmäßiger Energiedichte auf der zu bearbeitenden Fläche sichergestellt werden kann. Des weiteren besitzen Laserstrahlen eine geringe spektrale Bandbreite und eine hohe spektrale Energiedichte, so daß bei sehr kurzen Taktzeiten eine relativ große Energiemenge aufgebracht werden kann, wobei die Energieeinwirkung lokal eng begrenzt werden kann. Die große zeitliche und räumliche Kohärenz des Laserstrahls gewährleistet konstante Verfahrensbedingungen und stellt eine hohe Bearbeitungsgenauigkeit und Formteilgüte sicher. Des weiteren ermöglichen Laserstrahlen die Erzeugung sehr kurzer Lichtimpulse, so daß die Energie sehr genau dosiert aufbringbar ist.

Mit dem genannten Verfahren wird erreicht, daß der Aufschmelzbereich auf eine sehr geringe Borstenlänge beschränkt bleibt, wodurch eine Schwächung der Borsten durch eine Orientierungsrückbildung der Moleküle und damit eine Verschlechterung der mechanischen Eigenschaften verhindert wird. Des weiteren kann ein sehr gezieltes, schnelles Aufschmelzen räumlich eng begrenzter Materialbereiche erreicht werden. Eine Vielzahl von Borsten oder Borstenbündeln lassen sich in einem einzigen Durchgang gleichzeitig befestigen, so daß sich sehr kurze Zyklus-Zeiten ergeben. Es hat sich auch gezeigt, daß mit dem genannten Verfahren bei der Befestigung von Borsten in einem Borstenträger hohe Halte- und Auszugskräfte bei geringen Einbau- bzw. Einbettungslängen zu erzielen sind.

In einfacher Weise lassen sich auch gefüllte Borsten, beispielsweise Borsten mit abrasiven Einlagerungen, mit einem für Laserstrahlen durchlässigen Borstenträger verbinden.

Die Wechselwirkung zwischen den Laserstrahlen und dem aufzuschmelzenden Material, insbesondere Kunststoff, wird im wesentlichen bestimmt durch die Wellenlänge des verwendeten Lasers und das Absoptionsverhalten des Kunststoffes. Nach entsprechender Absorption der Laserenergie kann eine Reaktion einerseits über thermische Prozesse wie Schmelzen und Verdampfen von Matrix-Material, Ausbleichen von organischen Farbstoffen, Entfernen von Schwarzpigmenten, Aufschäumen, oder durch photochemische Prozesse, z.B. mit photoaktiven Weißpigmenten im UV-Bereich erfolgen.

Aufgrund der hohen Leistung des Lasers mit hoher Energiedichte pro beaufschlagter Fläche können sehr hohe Bewegungsgeschwindigkeiten bei der Fertigung und dadurch sehr kurze Taktzeiten erreicht werden, die verglichen mit den oben genannten bekannten Verfahren bis zu 70 % niedriger liegen können. Des weiteren ist es möglich, beispielsweise bei Zahnbürsten die gesamte Besteckungsfläche einer oder mehrerer Bürsten in einem einzigen Durchgang zu bearbeiten.

Es hat sich gezeigt, daß mit dem erfindungsgemäßen Verfahren eine hohe Flexibilität erreicht werden kann, da es an unterschiedliche Geometrieformen des Borstenträgers leicht anpassbar ist. Darüber hinaus ermöglicht es die Gestaltung unterschiedlicher Wandstärken ohne Verlängerung der Fertigungszeiten und bringt insgesamt eine sehr hohe Produktivität bei hoher Produktionsgeschwindigkeit und hoher Prozeßqualität, d.h. niedrigen Ausschußquoten und hoher gleichmäßiger Qualitätsgüte mit sich.

Vorzugsweise ist eines der zu verbindenden Bauteile für Laserstrahlen durchlässig, d.h. nicht-absorbierend, während das andere Bauteil zumindest im Bereich der Verbindungsstelle aus einem die Laserstrahlen absorbierenden, aufschmelzbaren Material besteht. Somit können die Laserstrahlen durch das durchlässige Bauteil hindurch auf die Verbindungsstelle gerichtet werden, so daß sie dort das absorbierende Material des anderen Bauteils aufschmelzen.

Das die Laserstrahlen absorbierende Material kann entweder von Hause aus absorbierend sein, es ist jedoch auch möglich, die absorbierende Wirkung des Materials durch zumindest bereichsweise Einbringung von Füll- und/oder Farbstoffen zu bewirken. Auf diese Weise ist es möglich, die beiden zu verbindenden Bauteile (Borstenträger und Borste bzw. Borstenbündel) aus dem gleichen Grundmaterial herzustellen, wobei lediglich eines der Bauteile durch Einbringung der genannten Stoffe eine absorbierende Wirkung erhält. Somit können beispielsweise gleiche Kunststoffmaterialien, die durch unterschiedliche Additiv- bzw. Füllstoffzugabe voneinander abweichende Lichtdurchlässigkeits-und Absorptionseigenschaften besitzen, miteinander verbunden werden.

Des weiteren kann vorgesehen sein, das für Laserstrahlen durchlässige Bauteil, beispielsweise die Borste, zumindest im Bereich der Verbindungsstelle, d.h. am unteren Ende der Borste durch einen Überzug und/oder die Einbringung von Füll- bzw. Farbstoffen absorbierend auszubilden. Die Laserstrahlen können dann durch das durchlässige Bauteil hindurch auf die Verbindungsstelle gerichtet werden, wo sie den durch die genannten Maßnahmen absorbierend wirkenden Abschnitt dieses Bauteils aufschmelzen. Der besondere Vorteil dieser Vorgehensweise liegt darin, daß das andere Bauteil hinsichtlich seiner Gestaltung und seines Materials vollständig frei ist.

Es ist darüber hinaus auch möglich, an der Verbindungsstelle eine Einlage aus einem die Laserstrahlen absorbierenden Material anzuordnen, um an der Verbindungsstelle die zum Aufschmelzen notwendige Wärme zu erzeugen. Die Einlage kann auch von einem Hilfswerkzeug gebildet sein, das anschließend weggefahren werden kann, so daß das aufgeschmolzene Bauteilende mit dem gegebenenfalls ebenfalls aufgeschmolzenen anderen Bauteil verbunden werden kann. Alternativ ist es auch möglich, die Einlage als verlorenes Hilfsmittel an der Verbindungsstelle zu belassen.

Bei der Befestigung von Borsten in einem Borstenträger werden vorzugsweise die folgenden Materialkombinationen verwendet. Einerseits können der Borstenträger und die Borsten aus Polypropylen bestehen, wobei eines der Bauteile, vorzugsweise der Borstenträger, transparent ausgebildet ist, während die Borsten beispielsweise durch Verwendung von TiO₂ eingefärbt und dadurch absorbierend sind. Andererseits ist es möglich, den Borstenträger aus SAN (thermoplastische Copolymere aus Styrol und Acrylnitril) und die Borsten aus Polyamid herzustellen, wobei die Borsten zur Erzielung der absorbierenden Eigenschaften eingefärbt sind, während der Borstenträger aus SAN transparent ausgebildet ist. Die Laserstrahlen werden somit durch den Borstenträger aus SAN hindurchgeleitet und schmelzen die Borsten auf. In einer weiteren Ausgestaltung ist es möglich, den Borstenträger aus Polypropylen und die Borsten aus Polyamid herzustellen, wobei der Borstenträger zur Erzielung der absorbierenden Eigenschaften eingefärbt wird und die Borsten transparent ausgebildet werden. Die Laserstrahlen werden dann durch die Borsten hindurch auf die Verbindungsstelle aufgebracht und schmelzen dort das Material des Borstenträgers auf.

Weitere Einzelheiten und Merkmale der Erfindung sind aus der folgenden Beschreibung einiger Ausführungsbeispiele unter Bezugnahme auf die Zeichnung ersichtlich. Es zeigen:
- Figur 1a, 1b, 1c: einzelne Schritte eines Verfahrens zur Anbringung von Einzelborsten an einem Borstenträger,
- Figur 2a, 2b, 2c: eine erste Abwandlung des Verfahrens,
- Figur 3a, 3b, 3c: eine zweite Abwandlung des Verfahrens,
- Figur 4a, 4b, 4c: eine dritte Abwandlung des Verfahrens,

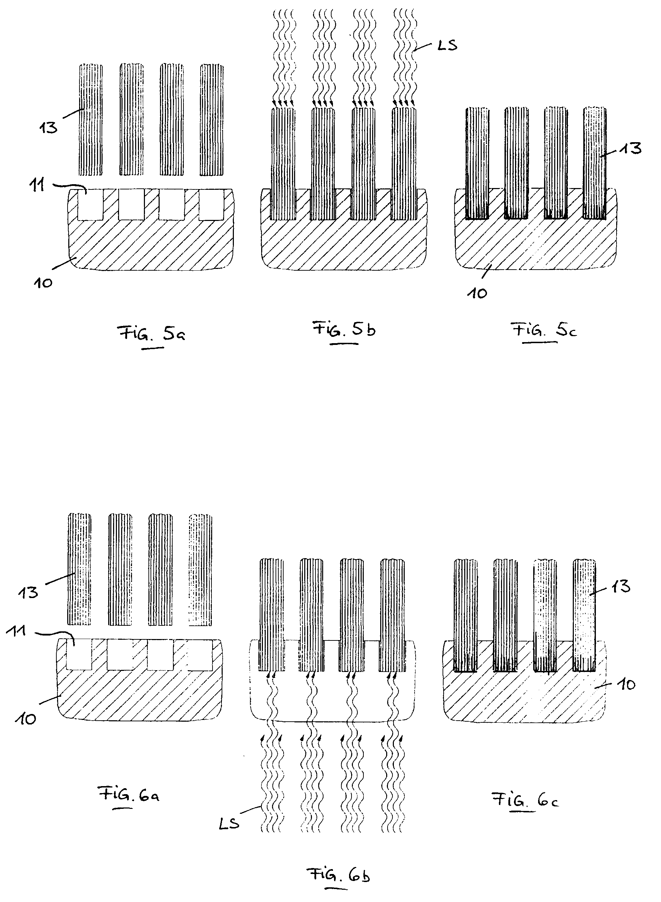

- Figur 5a, 5b, 5c: einzelne Schritte eines Verfahrens zur Anbringung von Borstenbündeln an einem Borstenträger,
- Figur 6a, 6b, 6c: eine erste Abwandlung des Verfahrens,

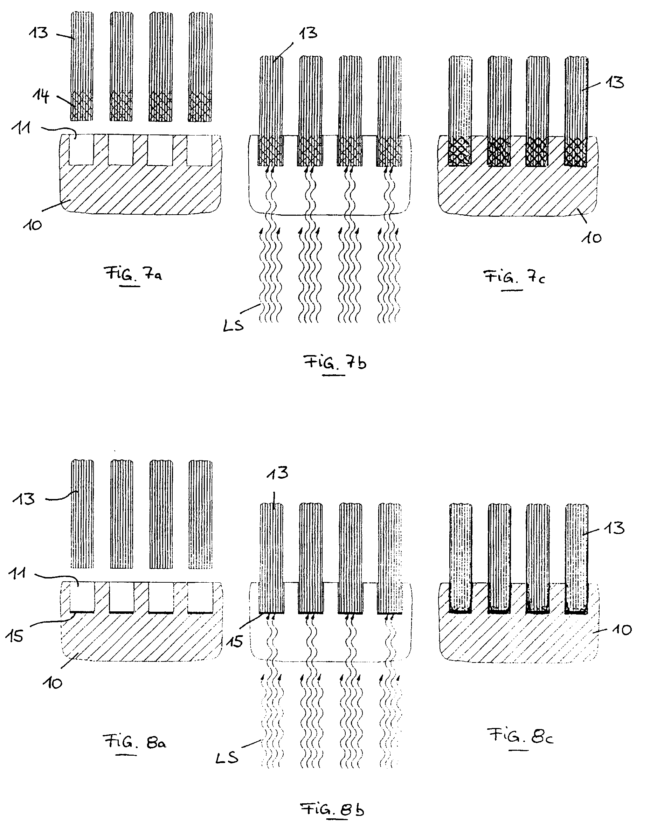

- Figur 7a, 7b, 7c: eine zweite Abwandlung des Verfahrens und
- Figur 8a, 8b, 8c: eine dritte Abwandlung des Verfahrens.

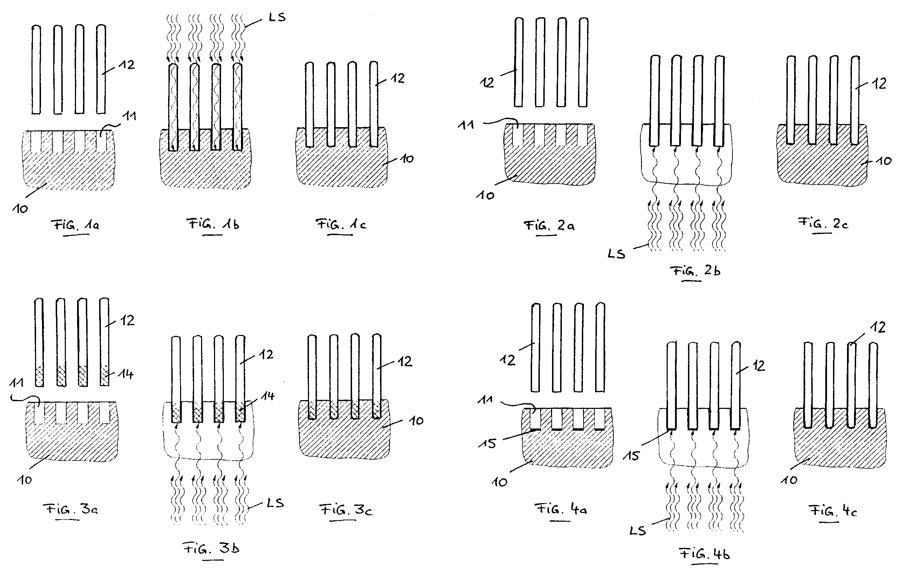

In den Figuren 1a, 1b und 1c sind die einzelnen Schritte des Verfahrens gezeigt, um mehrere Einzelborsten 12 an einem Borstenträger 10 stoffschlüssig anzubringen. Der Borstenträger 10 ist mit einer Vielzahl von Sacklöchern 11 versehen, in die jeweils eine Einzelborste 12 im nichterwärmten Zustand eingesteckt wird. Die Einzelborste 12 besteht aus einem für Laserstrahlen durchlässigen Material, während der Borstenträger 10 zumindest im Bereich des Sackloches 11 aus einem die Laserstrahlen absorbierenden Material besteht. Die Einzelborsten 12 werden soweit unter enger Passung in jeweils ein Sackloch 11 eingesteckt, bis ihre Unterseite auf dem Sacklochboden aufliegt. Anschließend werden Laserstrahlen LS gleichzeitig durch die durchlässigen Einzelborsten 12 hindurch auf die Verbindungsstelle am Sacklochboden aufgebracht, wodurch sich infolge von Absorption der Laserstrahlen am Sacklochboden Wärme entwickelt, die das Material des Borstenträgers 10 aufschmilzt. Durch Konvektionswärme kann auch das Material der Einzelborsten 12 aufschmelzen, so daß die Materialien ineinanderfließen und ein eventueller Spalt zwischen dem Sackloch 11 und der Einzelborste 12 ausgefüllt wird und die Einzelborsten 12 an ihrem unteren Ende vollflächig in den Borstenträger 10 eingebettet und mit diesem verschweißt sind.

Die Ausgestaltung gemäß den Figuren 2a, 2b und 2c unterscheidet sich vom vorgenannten Ausführungsbeispiel dadurch, daß nunmehr das Material des Borstenträgers 10 für Laserstrahlen durchlässig ist, während die Borsten zumindest an ihrem unteren Ende die Laserstrahlen absorbieren können. Nachdem die Einzelborsten 12 in die Sacklöcher 11 des Borstenträgers 10 eingesetzt sind, werden durch den Borstenträger 10 hindurch Laserstrahlen auf die Verbindungsstelle am Sacklochboden aufgebracht, wodurch die Einzelborsten 12 in genannter Weise mit dem Borstenträger 11 verschweißt werden.

Die Abwandlung gemaß den Figuren 3a, 3b und 3c gegenüber dem Ausführungsbeispiel gemäß den Figuren 2a, 2b und 2c besteht darin, daß die Einzelborsten 12 in ihrem unteren, in das Sackloch 11 einzuführenden Abschnitt mit Füll- und Farbpartikeln 14 versehen sind, die die Laserstrahlen LS absorbieren können, so daß die Einzelborsten 12 in ihren oberen, nicht in das Sackloch 11 einzuführendem Abschnitt ebenfalls aus einem für Laserstrahlen durchlässigen Material bestehen können.

Die Figuren 4a, 4b und 4c zeigen eine Ausgestaltung, bei der sowohl die Einzelborsten 12 als auch der Borstenträger 10 aus einem für Laserstrahlen durchlässigen Material bestehen, so daß vor dem Einführen der Einzelborsten 12 in die Sacklöcher 11 am Sacklochboden eine die Laserstrahlen absorbierende Einlage 15 angeordnet wird. Nach dem die Einzelborsten 12 in die Sacklöcher 11 bis zum Aufsitzen auf dem Sacklochboden bzw. der Einlage 15 eingesetzt sind, werden Laserstrahlen durch die Einzelborsten 12 oder - wie dargestellt - durch den Borstenträger 10 hindurch auf die Verbindungsstelle aufgebracht, wo sie durch die Einlage 15 absorbiert werden. Infolge von Konvektionswärme schmelzen sowohl der Borstenträger 10 als auch die Einzelborsten 12 in ihrem Kontaktbereich auf und gehen eine stoffschlüssige Verbindung ein.

Was in den vorgenannten 4 Ausführungsbeispielen jeweils mit Einzelborsten erläutert wurde, läßt sich in gleichartiger Weise auch mit Borstenbündeln 13 durchführen, die als lose Packung in jeweils ein Sackloch 11 unter enger Passung eingeführt werden, wobei bei Zuführung von Laserstrahlen die einzelnen Borsten des Borstenbündels 13 einerseits miteinander verbunden und andererseits mit dem Borstenträger 10 verschweißt werden. Die weiteren Merkmale stimmen mit dem Verfahren zur Anbringung von Einzelborsten überein, worauf verwiesen wird.

## Patentansprüche

1. Verfahren zur Herstellung von Borstenwaren, insbesondere Bürsten, wobei in einem aus thermoplastischem Material bestehenden Borstenträger (10) mehrere Sacklöcher (11) ausgebildet werden, in die jeweils eine aus thermoplastischem Material bestehende Beborstung in Form einer Einzelborste (12) oder eines Borstenbündels (13) bis zum Aufsetzen auf dem Sacklochboden eingeführt wird, woraufhin der Borstenträger (10) und die Beborstung (12, 13) in ihrem Kontaktabschnitt miteinander verschweißt werden, indem Laserstrahlen (LS) durch den Borstenträger (10 oder die Beborstung (12, 13) hindurch transmittiert und direkt auf den Kontaktabschnitt aufgebracht und dort unter Entstehung von Wärme absorbiert werden.

2. Verfahren nach Anspruch 1, dadurch gekennzeichnet, daß die Einzelborste (12) oder das Borstenbündel (13) unter enger Passung in das Sackloch (11) eingeführt wird.

3. Verfahren nach Anspruch 1 oder 2, dadurch gekennzeichnet, daß zumindest eines der zu verschweißenden Bauteile (Borstenträger (10) oder Beborstung (12, 13)) zumindest im Bereich des Kontaktabschnittes aus einem die Laserstrahlen absorbierenden Material steht.

4. Verfahren nach einem der Ansprüche 1 bis 3, dadurch gekennzeichnet, daß die Beborstung (12, 13) und/oder der Borstenträger (10) zumindest im Bereich des Kontaktabschnittes Füll- und/oder Farbstoffe (14) enthält, die die Laserstrahlen absorbieren.

5. Verfahren nach einem der Ansprüche 1 bis 4, dadurch gekennzeichnet, daß im Bereich des Sacklochbodens eine die Laserstrahlen (LS) absorbierende Einlage (15) angeordnet ist.

6. Verfahren nach einem der Ansprüche 1 bis 5, dadurch gekennzeichnet, daß mehrere oder alle Einzelborsten (12) oder Borstenbündel (13) der Borstenware gleichzeitig mit dem Borstenträger (10) verschweißt werden.

7. Verfahren nach einem der Ansprüche 1 bis 6, dadurch gekennzeichnet, daß die Sacklöcher (11) mittels Laserstrahlen in dem Borstenträger (10) ausgebildet werden.

8. Verfahren nach einem der Ansprüche 1 bis 7, dadurch gekennzeichnet, daß die Laserstrahlen von einem CO₂-Laser, Neodym-Laser oder Eximer-Laser aufgebracht werden.

## Claims

1. Method for the manufacture of brushware, particularly brushes, in which in a thermoplastic material bristle carrier (10) are formed several blind holes (11), in each of which is introduced a thermoplastic material bristle system in the form of a single bristle (12) or a bristle bundle (13) until engagement takes place on the blind hole bottom and then the bristle carrier (10) and bristle system (12, 13) are welded together in their contact portion, in that laser beams (LS) are transmitted through the bristle carrier (10) or bristle system (12, 13) and applied directly to the contact portion and are absorbed there accompanied by the production of heat.

2. Method according to claim 1, characterized in that the single bristle (12) or bristle bundle (13) is inserted in the blind hole (11) in close fitting manner.

3. Method according to claim 1 or 2, characterized in that at least one of the components to be welded (bristle carrier (10) or bristle system (12, 13)), at least in the area of the contact portion comprises a laser beam-absorbing material.

4. Method according to one of the claims 1 to 3, characterized in that the bristle system (12, 13) and/or bristle carrier (10), at least in the area of the contact portion, contains fillers and/or dyes (14), which absorb the laser beams.

5. Method according to one of the claims 1 to 4, characterized in that an insert (15) absorbing the laser beams (LS) is located in the area of the blind hole bottom.

6. Method according to one of the claims 1 to 5, characterized in that several or all the single bristles (12) or bristle bundles (13) of the brushware are simultaneously welded to the bristle carrier (10).

7. Method according to one of the claims 1 to 6, characterized in that the blind holes (11) are formed by means of laser beams in the bristle carrier (10).

8. Method according to one of the claims 1 to 7, characterized in that the laser beams are supplied by a CO₂ laser, neodymium laser or excimer laser.

## Revendications

1. Procédé de fabrication d'articles de brosserie, en particulier de brosses, dans lequel plusieurs canaux borgnes (11) sont ménagés dans un support de brosse (10) en matière thermoplastique, canaux dans chacun desquels on introduit jusqu'à contact avec le fond un garnissage de poils consistant en un poil individuel (12) ou un faisceau de poils (13), procédé dans lequel le support de brosse (10) et le garnissage de poils (12,13) sont ensuite solidarisés par soudure au niveau de leur zone de contact en faisant passer des rayons laser (LS) à travers le support de brosse (10) ou le garnissage de poils (12,13) et en les appliquant directement sur la zone de contact où ils sont absorbés en dégageant de la chaleur.

2. Procédé selon la revendication 1, caractérisé en ce que le poil individuel (12) ou le faisceau de poils (13) sont introduits à ajustement étroit dans le logement (11).

3. Procédé selon la revendication 1 ou 2, caractérisé en ce qu'au moins une des parties à solidariser par soudure (le support de brosse (10) ou le garnissage de poils (12,13)) est réalisée au moins dans la région de la zone de contact en un matériau absorbant les rayons lasers.

4. Procédé selon l'une quelconque des revendications 1 à 3, caractérisé en ce que le garnissage de poils (12,13) et/ou le support de brosse (10) contien(nen)t au moins dans la région de la zone de contact des matières de remplissage ou colorantes (14) absorbant les rayons lasers.

5. Procédé selon l'une quelconque des revendications 1 à 4, caractérisé en ce que la zone du fond du canal présente un dépôt (15) absorbant les rayons lasers (LS).

6. Procédé selon l'une quelconque des revendications 1 à 5, caractérisé en ce que plusieurs ou tous les poils individuels (12) ou faisceaux de poils (13) de l'article de brosserie sont soudés simultanément au support de brosse (10).

7. Procédé selon l'une quelconque des revendications 1 à 6, caractérisé en ce que les canaux à fond plein (11) sont conformés dans le support de brosse (10) au moyen de rayons lasers.

8. Procédé selon l'une quelconque des revendications 1 à 7, caractérisé en ce que les rayons lasers sont appliqués par un laser à CO₂. un laser au néodyme ou un laser eximeur.
